# FASCICULE DE BREVET EUROPEEN

(11) **EP 3 947 918 B1**
(45) Date de publication et mention de la délivrance du brevet: **26.04.2023**
(21) Numéro de dépôt: 20728118.9
(22) Date de dépôt: 19.03.2020
(51) Int. Cl.: F01D 11/00

(54) **ROTOR DE SOUFFLANTE POUR TURBOMACHINE**
ROTOR EINES TURBOMASCHINENGEBLÄSES
TURBOMACHINE FAN ROTOR

(30) Priorité: 28.03.2019 FR 1903293
(43) Date de publication de la demande: 09.02.2022
(73) Titulaire: SAFRAN, 75015 Paris (FR); SAFRAN AIRCRAFT ENGINES, 75015 Paris (FR)
(72) Inventeur: EDYNAK, Jérémy, Philippe, Pierre, 77550 MOISSY-CRAMAYEL (FR); GUIVARC'H, Jérémy, 77550 MOISSY-CRAMAYEL (FR); AULIAC, Lola, 77550 MOISSY-CRAMAYEL (FR); GIRARD, Thibaut, Dominique, Augustin, 77550 MOISSY-CRAMAYEL (FR); FAIVRE D'ARCIER, Pierre, Jean, 77550 MOISSY-CRAMAYEL (FR)
(74) Mandataire: Gevers & Orès
(86) Numéro de dépôt international: PCT/FR2020/050600
(87) Numéro de publication internationale: WO 2020/193923

(56) Documents cités:
- WO-A1-2010/007323
- FR-A1- 3 026 794
- US-A1- 2012 301 314
- US-A1- 2014 186 187
- US-A1- 2015 125 305
- US-B1- 6 416 280

## Description

### Domaine technique de l'invention

La présente invention concerne un rotor de soufflante pour une turbomachine, avantageusement mais pas uniquement pour aéronef.

### Arrière-plan technique

L'état de la technique comprend notamment les documents US-A1-2014/186187, FR-A1-3 026 794, US-B1-6 416 280, WO-A1-2010/007323 et US-A1 -2015/125305.

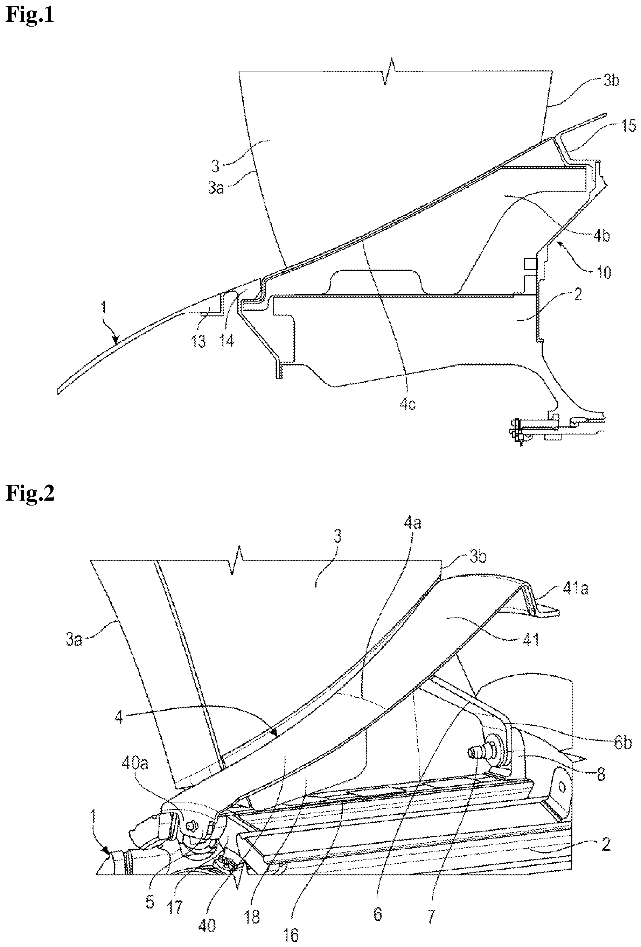

En se référant à la figure 1 qui montre une vue partielle en coupe d'un rotor 1 de soufflante, il est connu de l'état de la technique un rotor 1 de soufflante ayant un axe de rotation et comportant un carter de soufflante, un disque 2 de soufflante, des pales 3 ou aubes de soufflante comportant comme dispositif de rétention des pieds emmanchés dans des alvéoles de la périphérie dudit disque 2. Chaque pale 3 comprend un intrados, un extrados, un bord d'attaque 3a et un bord de fuite 3b.

Le rotor 1 de soufflante comprend des plateformes 4b intercalées entre les pales 3 de soufflante et fixées à la périphérie du disque 2. Chaque plateforme 4b comporte une surface aérodynamique 4c s'étendant le long dudit axe sensiblement depuis les bords d'attaque 3a jusqu'aux bords de fuite 3b des pales 3 entre lesquelles cette plateforme 4b est montée.

Enfin, le rotor 1 comprend un cône amont 13, une virole amont 14 et une virole aval 15, les deux viroles 14, 15 étant solidarisées au disque 2 de soufflante. Un tel rotor de soufflante est connu notamment du document US2008/0226458.

Chaque plateforme doit assurer les fonctions suivantes dont une fonction aérodynamique qui est sa fonction principale et une définition de la veine d'écoulement de l'air.

De plus, chaque plateforme doit satisfaire à toutes les conditions d'opération, à savoir assurer les performances pour toute l'enveloppe de fonctionnement, par exemple un vol pour un aéronef, garantir les exigences de sécurité et garantir la disponibilité du rotor comme partie du moteur pour un usage commercial.

Enfin, chaque plateforme doit être intégrée dans l'environnement du rotor en ayant des interfaces cohérentes aux frontières de l'étage du rotor de soufflante et en évitant les perturbations au niveau des autres étages d'une turbomachine comprenant le rotor de soufflante.

Sur des turbomachines récentes, les déplacements, notamment tangentiels, des pales ou aubes de soufflante sont de plus en plus importants en augmentant avec le diamètre du rotor de soufflante.

Il existe donc un jeu entre les pales de soufflante et la surface aérodynamique s'étendant le long dudit axe sensiblement depuis les bords d'attaque jusqu'aux bords de fuite des pales entre lesquelles une plateforme est montée. Ce jeu peut dépasser 8 millimètres au bord de fuite de chaque pale alors que ce jeu est pratiquement nul au bord d'attaque de chaque pale.

La présence d'un tel jeu nécessite la pose d'un joint entre chaque pale et la surface aérodynamique de la plateforme. Or les technologies de joint actuelles ne permettent pas de combler un jeu de plus de 8 millimètres. L'étanchéité de l'ensemble rotor de soufflante au niveau de la connexion de chaque pale avec la plateforme s'en trouve de ce fait détériorée.

Par conséquent, le problème à la base de l'invention est, dans un rotor de soufflante, de garantir l'étanchéité entre une plateforme de soufflante et chaque pale de soufflante, notamment au niveau de l'interface de la plateforme avec le bord de fuite de la pale.

### Résumé de l'invention

A cet effet, la présente invention concerne un rotor de soufflante pour une turbomachine, ce rotor ayant un axe de rotation et comportant :
- un disque de soufflante,
- des pales de soufflante comportant des pieds emmanchés dans des alvéoles de la périphérie dudit disque, chaque pale comprenant un intrados, un extrados, un bord d'attaque et un bord de fuite,
- des plateformes intercalées entre les pales de soufflante et fixées à la périphérie du disque, chaque plateforme comportant une surface aérodynamique s'étendant le long dudit axe sensiblement depuis les bords d'attaque jusqu'aux bords de fuite des pales entre lesquelles cette plateforme est montée,
   remarquable en ce que ladite surface aérodynamique comprend une portion longitudinale amont située du côté des bords d'attaque des pales et une portion longitudinale aval, indépendante de la portion longitudinale amont, située du côté des bords de fuite des pales, la portion longitudinale amont étant portée par un premier organe de la plateforme qui est fixé, de préférence de manière pivotante, audit disque et la portion longitudinale aval étant portée par un second organe de la plateforme qui est indépendant dudit premier organe et qui est fixé audit disque.

L'effet technique obtenu par la présente invention est de permettre à une plateforme de soufflante de suivre les déplacements, principalement tangentiels, des pales associées à la plateforme, notamment des déplacements de leur bord de fuite.

Pour cela, la présente invention propose de scinder axialement la surface aérodynamique de chaque plateforme de soufflante en deux portions longitudinales, en laissant une portion longitudinale aval mobile, dans le but de lui permettre de suivre les déplacements imposés par les pales associées. La portion longitudinale amont de la surface aérodynamique suit les déplacements du bord d'attaque des pales de soufflante associées à la plateforme tandis que la portion longitudinale aval suit les déplacements du bord de fuite des pales de soufflante.

La portion longitudinale amont de la surface aérodynamique suivant les déplacements du bord d'attaque est en réalité bloquée du fait des déplacements quasi nuls du bord d'attaque des pales de soufflante associées à la plateforme. Cependant, de manière plus générale, la présente invention pourrait être appliquée à une plateforme associée à deux pales de soufflante dont le bord d'attaque pourrait se déplacer.

Comme précédemment mentionné, les déplacements trop importants d'un bord de fuite d'une pale de soufflante non suivis par la plateforme sont à l'origine de difficultés rencontrées quant à la définition de l'étanchéité entre la plateforme et les deux pales de soufflante l'encadrant. Ceci est justement évité par la mise en oeuvre de la présente invention avec un second organe fixé de manière pivotante au disque de soufflante.

Pour suivre les débattements du bord de fuite des pales associées à une plateforme, le second organe de la plateforme supportant la portion longitudinale aval peut être, par exemple, monté sur le disque avec liberté de pivotement autour d'un axe en réalisant une liaison pivot par rapport au disque de soufflante. Dans les réalisations qui seront décrites ultérieurement, la partie amont de la plateforme a été dessinée de façon à pouvoir être fixe et solidaire du disque. Cependant il est possible d'imaginer qu'elle soit aussi pivotante, comme la partie aval.

La mise en oeuvre d'une plateforme en deux parties indépendantes avec deux portions longitudinales amont et aval permet d'utiliser les joints habituellement utilisés dans le domaine technique mais qui ne pouvaient plus convenir à des déplacements de plus de 8 millimètres entre le bord de fuite d'une pale de soufflante et la plateforme.

Avantageusement, le second organe est fixé au disque de manière pivotante. Avantageusement, une dimension axiale de la portion longitudinale amont, selon un axe de rotation du rotor, est comprise entre 0,5 fois et 1,5 fois une dimension axiale de la portion longitudinale aval.

Avantageusement, le second organe est fixé sur le disque par un unique élément de fixation définissant un axe de pivotement de cette portion longitudinale aval par rapport au disque.

Le second organe est fixé sur le disque avec une liberté de pivotement pour suivre le débattement du bord de fuite des pales de soufflante associées à la plateforme. Un pivotement autour d'un axe de fixation d'un unique élément de fixation représente la solution la plus simple ne nécessitant pas l'emploi de moyens coûteux, nombreux et encombrants.

Avantageusement, le second organe comprend une patte de fixation appliquée axialement sur une bride du disque, la patte de fixation comportant un orifice axial aligné avec un orifice axial de la bride, ledit élément de fixation traversant les orifices axiaux de la patte de fixation et de la bride.

Avantageusement, l'orifice de la patte de fixation reçoit au moins partiellement une bague traversée par ledit élément de fixation, cette bague étant serrée axialement contre la bride du disque et séparée par des jeux axial et radial de ladite patte de fixation.

La patte de fixation formant le second organe est donc montée avec des jeux axial et radial sur la bague qui est serrée contre le disque. Le diamètre de l'orifice de la patte de fixation est plus grand que le diamètre de l'élément de fixation afin qu'une portion de la bague soit introduite entre la patte de fixation et l'élément de fixation.

Il s'ensuit que, du fait de l'interposition partielle de la bague entre la patte de fixation et l'élément de fixation, la patte de fixation peut pivoter autour de l'élément de fixation qui la traverse tout en étant maintenue en position par rapport à l'élément de fixation.

Une portion de la bague à l'intérieur de la patte de fixation empêche un mouvement radial de la patte de fixation par rapport à l'élément de fixation et une portion de la bague externe à la patte de fixation fait butée contre un mouvement axial de la patte de fixation par rapport à l'élément de fixation. Avantageusement, l'élément de fixation est une vis dont une tête prend appui sur une face de la bride ou d'une pièce rapportée sur cette face et une tige filetée reçoit un écrou qui prend appui sur ladite bague.

Avantageusement, une des portions longitudinales comprend, à son extrémité longitudinale située du côté de l'autre des portions longitudinales, une surface d'appui pour l'autre portion longitudinale.

La plateforme selon la présente invention n'est pas monobloc en comportant des portions longitudinales amont et aval indépendantes l'une de l'autre. Par contre, une première portion longitudinale des deux portions longitudinales amont et aval peut comprendre une surface d'appui faisant saillie de la première portion pour supporter sans fixation et partiellement une extrémité en vis-à-vis de la deuxième portion longitudinale.

Avantageusement, les portions longitudinales comprennent des bords circonférentiels en regard l'un de l'autre, ladite surface d'appui s'étendant le long de l'un de ces bords, sur une partie seulement de l'étendue circonférentielle de ce bord.

L'invention concerne une turbomachine d'aéronef comportant un tel rotor.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :
[Fig. 1] la figure 1 est une représentation schématique d'une vue partielle en coupe d'un rotor de soufflante selon l'état de la technique,
[Fig. 2] la figure 2 est une représentation schématique d'une vue partielle en perspective d'un rotor de soufflante selon une forme de réalisation conforme à la présente invention, cette figure montrant des portions d'une pale et d'un disque de soufflante ainsi qu'une plateforme avec une surface aérodynamique comprenant des portions longitudinales amont et aval et leurs organes de fixation sur une dent du disque de soufflante, les portions longitudinales étant montrées en position montée à cette figure 2,
[Fig. 3] la figure 3 est une représentation schématique d'une vue en perspective du rotor de soufflante montré à la figure 2, seule la portion longitudinale amont de la surface aérodynamique étant représentée à cette figure 3,
[Fig. 4] la figure 4 est une représentation schématique d'une vue en perspective du rotor de soufflante montré à la figure 2, seule la portion longitudinale aval de la surface aérodynamique étant représentée à cette figure 4,
[Fig. 5] la figure 5 est une représentation schématique d'une vue en perspective d'une plateforme faisant partie d'un rotor de soufflante selon l'invention précédemment montré aux figures 2 à 4,
[Fig. 6] la figure 6 est une représentation schématique d'une vue en coupe du second organe de la portion longitudinale aval de la surface aérodynamique de la plateforme faisant partie d'un rotor de soufflante selon une forme de réalisation conforme à la présente invention, le second organe étant relié à une dent d'un disque de soufflante du rotor par l'intermédiaire d'une bride.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité. Par exemple, aux figures 2 à 4, seule une pale de soufflante est illustrée, les autres pales ayant été ôtées pour un meilleur aperçu des premier et second organes des portions longitudinales de la surface aérodynamique.

### Description détaillée de l'invention

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant principalement aux figures 2 à 6, la présente invention concerne un rotor 1 de soufflante destiné avantageusement à une turbomachine d'aéronef.

Un tel rotor 1 est monté tournant autour d'un axe de rotation et comporte un disque 2 de soufflante et des pales 3 de soufflante comportant des pieds emmanchés dans des alvéoles de la périphérie dudit disque 2, dont une seule pale 3 est visible. Chaque pale 3 comprend un intrados, un extrados, un bord d'attaque 3a et un bord de fuite 3b.

Une périphérie du disque 2 est avantageusement denté en étant munie de dents 16, avantageusement de section trapézoïdale et s'étendant axialement sur le disque 2 par rapport à l'axe de rotation du rotor 1. Au moins une cale 17 est prévue côté amont entre deux dents 16 adjacentes qui forment une alvéole de réception d'un pied d'une pale 3, cette cale 17 étant destinée à bloquer axialement le pied de pale dans son alvéole correspondante.

Des plateformes 4 sont intercalées entre les pales 3 de soufflante et fixées à la périphérie du disque 2. Chaque plateforme 4 peut donc être interposée entre deux pales 3 de soufflante consécutives.

Chaque plateforme 4 comporte une surface aérodynamique, référencée 4a à la figure 2, s'étendant le long dudit axe sensiblement depuis les bords d'attaque 3a jusqu'aux bords de fuite 3b des deux pales 3 entre lesquelles cette plateforme 4 est montée.

Selon la présente invention, la surface aérodynamique 4a comprend une portion longitudinale amont 40 située du côté des bords d'attaque 3a des pales 3 et une portion longitudinale aval 41 située du côté des bords de fuite 3b des pales 3.

La portion longitudinale amont 40 de la surface aérodynamique 4a est portée par un premier organe 5 de la plateforme 4 qui est fixé de manière pivotante au disque 2 de soufflante. La portion longitudinale aval 41 de la surface aérodynamique 4a est portée par un second organe 6 de la plateforme 4. Ce second organe 6 est indépendant du premier organe 5 et est fixé de manière pivotante au disque 2 de soufflante.

Le second organe 6 permet à la portion longitudinale aval 41 de suivre les déplacements du bord de fuite 3b des deux pales 3 de soufflante associées. En fonctionnement, la portion longitudinale aval 41 de la surface aérodynamique 4a peut effectuer un mouvement de rotation autour de sa liaison pivot avec le disque 2 de soufflante.

La principale difficulté pour la mise en oeuvre de la présente invention est de gérer un jeu radial entre la portion longitudinale amont 40 et la portion longitudinale aval 41. Ce jeu doit être ni trop petit pour permettre la rotation des deux portions entre elles, ni trop grand pour que les portions soient centrées l'une par rapport à l'autre.

De plus, la rotation de la portion longitudinale aval 41 par rapport à la portion longitudinale amont 40 entraîne la création d'une potentielle marche dans la veine de la surface aérodynamique 4a.

Par ailleurs, il est également important de mettre en place une technologie de joint capable, d'une part, de gérer l'interface entre les deux portions longitudinales 40, 41 et, d'autre part, un joint capable de compenser le jeu nécessaire à la rotation de la portion longitudinale aval 41 et de la virole aval référencée 15 à la figure 1. Le joint peut être un joint torique, un joint fendu ou un joint Oméga, etc.

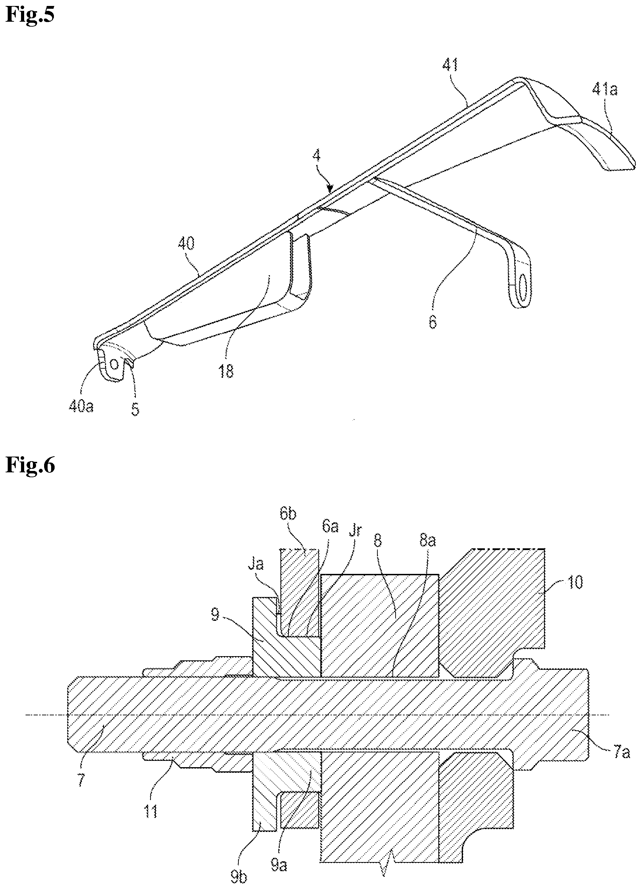

En se référant à la figure 5, la plateforme 4 peut comprendre aussi un logement 18 sur une de ses faces longitudinales portant les premier et second organes 5, 6, le logement 18 pouvant être disposé entre les premier et second organes 5, 6.

La portion longitudinale aval 41 peut présenter une extrémité libre 41a recourbée vers le disque 2 de soufflante, cette extrémité libre 41a faisant butée contre une pièce non montrée aux figures 2 à 5 mais montrée à la figure 1 en tant que virole aval 15 solidarisée par une branche avec le disque 2 de soufflante.

La surface aérodynamique 4a peut être de forme légèrement concave sur sa face tournée vers les deux pales 3 de soufflante l'encadrant et incurvée dans sa largeur.

Sans que cela soit limitatif, une dimension axiale de la portion longitudinale amont 40 peut être comprise entre 0,5 fois et 1,5 fois une dimension axiale de la portion longitudinale aval 41. Il s'ensuit que la dimension axiale de la portion longitudinale amont 40 peut être plus petite, égale ou plus grande que la dimension axiale de la portion longitudinale aval 41.

Le premier organe 5 peut être porté par une extrémité recourbée 40a de la portion longitudinale amont 40. L'extrémité recourbée 40a de la portion longitudinale amont 40 peut être solidarisée par un élément de solidarisation avec le disque 2 de soufflante en formant alors le premier organe 5, avantageusement une des dents 16 disposées à la circonférence du disque 2 de soufflante. La solidarisation de l'extrémité recourbée 40a de la portion longitudinale amont se fait de préférence à une extrémité longitudinale de la dent 16 par la tranche de la dent 16 formant son épaisseur.

Le second organe 6 peut être fixé sur le disque 2 de soufflante par un unique élément de fixation 7 définissant un axe de pivotement de cette portion longitudinale aval 41 par rapport au disque 2.

Une largeur de la portion longitudinale aval 41 peut être augmentée en rapprochement de l'extrémité libre de la portion longitudinale aval 41 portant avantageusement le bord recourbé. Ceci dépend de l'écartement entre deux pales 3 de soufflante consécutives restant constant ou non.

En se référant toujours principalement aux figures 2 et 6 et plus particulièrement à la figure 6, le second organe 6 associé la portion longitudinale aval 41 peut comprendre une patte de fixation 6 appliquée axialement sur une bride 8 du disque 2 de soufflante.

La bride 8 peut s'étendre à partir d'une dent 16 présente sur la périphérie du disque 2 de soufflante, à une extrémité longitudinale de la dent 16 la plus éloignée du premier organe 5. La bride 8 peut être portée par une face de la dent 16 en vis-à-vis d'une face interne de la surface aérodynamique 4a portant les premier et second organes 5, 6, avantageusement en s'étendant perpendiculairement à la face de la dent 16 la portant.

La patte de fixation 6 peut être de forme allongée, la portion longitudinale aval 41 s'étendant à distance du disque 2 en s'éloignant du disque 2. La patte de fixation 6 peut présenter une partie d'extrémité recourbée 6b traversée d'un orifice 6a.

Cet orifice 6a de la patte de fixation 6 est un orifice axial aligné avec un orifice axial 8a de la bride 8 en position de fixation du second organe 6. La partie d'extrémité recourbée 6b de la patte de fixation 6 s'applique alors contre la bride 8 du disque 2 de soufflante.

Comme particulièrement bien visible à la figure 6, l'élément de fixation 7 traverse l'orifice axial 6a de la partie d'extrémité recourbée 6b de la patte de fixation 6 et l'orifice axial 8a de la bride 8.

Afin de permettre une liberté de rotation de la partie d'extrémité recourbée 6b de la patte de fixation 6 du second organe 6 par rapport à l'élément de fixation 7, l'orifice 6a de la partie d'extrémité recourbée 6b de la patte de fixation 6 peut recevoir au moins partiellement une bague 9 traversée par l'élément de fixation 7.

Il peut donc y avoir une portion interne 9a de la bague 9 logée dans l'orifice 6a de la partie d'extrémité recourbée 6b de la patte de fixation 6, la portion interne 9a de la bague 9 étant intercalée entre une paroi interne de l'orifice 6a et une paroi externe de l'élément de fixation 7. Le reste de la bague 9 est une portion externe 9b de la bague 9 disposée à l'extérieur de la partie d'extrémité recourbée 6b et pouvant former une collerette 9b pouvant faire butée contre un déplacement axial de la partie d'extrémité recourbée 6b de la patte de fixation 6.

La bague 9 peut être serrée axialement contre la bride 8 du disque 2 assurant ainsi une solidité de la fixation mais tout en restant séparée par des jeux axial Ja et radial Jr de la partie d'extrémité recourbée 6b de la patte de fixation 6. La partie d'extrémité recourbée 6b de la patte de fixation 6 peut ainsi pivoter autour de l'élément de fixation 7 du fait des jeux axial Ja et radial Jr avec la bague 9.

Le jeu radial Jr peut ainsi être limité par la portion de la bague 9 interne à la partie d'extrémité recourbée 6b et le jeu axial Ja peut être limité par la portion de la bague 9 externe à la partie d'extrémité recourbée 6b, avantageusement sous forme d'une collerette 9b faisant butée contre un éloignement de la bride 8 en direction axiale de la partie d'extrémité recourbée 6b de la patte de fixation 6.

Toujours en se référant principalement à la figure 6, l'élément de fixation 7 peut être une vis présentant une tête 7a et une tige filetée.

La tête 7a de la vis peut prendre appui sur une face de la bride 8 opposée à celle tournée vers la bague 9 ou d'une pièce rapportée 10 sur cette face, cette dernière alternative étant montrée à la figure 6, la pièce rapportée 10 étant par exemple une rondelle, ou comme ici, une pièce faisant partie d'un tambour de compresseur basse pression de la turbomachine. Il est aussi possible de remplacer la tête 7a par un écrou.

A son autre extrémité libre, la tige filetée peut recevoir aussi un écrou 11 qui prend appui sur la bague 9 et la serre contre la bride 8 par l'intermédiaire de sa portion interne 9a à la partie d'extrémité recourbée 6b de la patte de fixation 6.

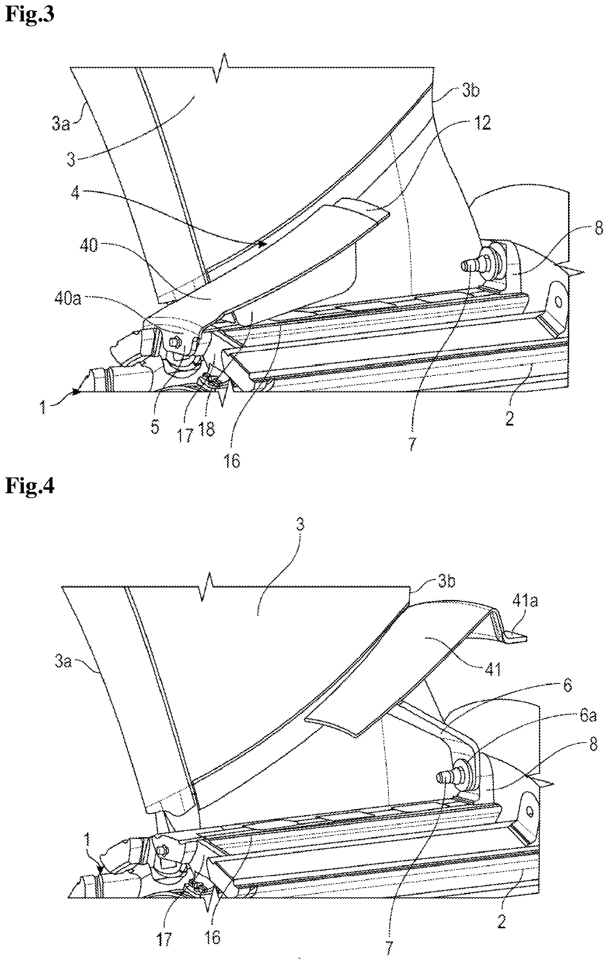

En se référant plus particulièrement à la figure 3 qui montre une portion longitudinale amont 40 sans la présence d'une portion longitudinale aval 41, une 40 des portions longitudinales 40, 41, à la figure 3 la portion longitudinale amont 40 ce qui n'est pas limitatif, peut comprendre, à son extrémité longitudinale située du côté de l'autre 41 des portions longitudinales 40, 41, à la figure 3 la portion longitudinale aval 41, une surface d'appui 12 pour cette autre portion longitudinale 41.

Ceci permet d'éviter un décalage entre portions longitudinales 40, 41 amont et aval et d'avoir un support de la portion longitudinale aval 41 par la portion longitudinale amont 40 à une extrémité de la portion longitudinale aval 41 à distance du second organe 6.

Comme particulièrement bien visible aux figures 3 et 4 prises en combinaison, les portions longitudinales 40, 41 de la surface aérodynamique 4a peuvent comprendre des bords circonférentiels en regard l'un de l'autre. La surface d'appui 12 peut s'étendre le long de l'un de ces bords, sur une partie seulement de l'étendue circonférentielle de ce bord.

Cette partie de la surface d'appui 12 peut être disposée symétriquement par rapport au bord circonférentiel la portant avec seules des portions d'extrémité du bord circonférentiel portant la surface d'appui 12 n'étant pas reliées à la surface d'appui 12. Sinon, la surface d'appui 12 peut être portée par une majeure partie du bord circonférentiel.

Une application particulièrement avantageuse d'un tel rotor 1 de soufflante peut être pour une turbomachine, avantageusement une turbomachine d'aéronef.

L'invention n'est nullement limitée aux modes de réalisation décrits et illustrés qui n'ont été donnés qu'à titre d'exemples.

## Revendications

1. Rotor (1) de soufflante pour une turbomachine, ce rotor (1) ayant un axe de rotation et comportant :
- un disque (2) de soufflante,
- des pales (3) de soufflante comportant des pieds emmanchés dans des alvéoles de la périphérie dudit disque (2), chaque pale (3) comprenant un intrados, un extrados, un bord d'attaque (3a) et un bord de fuite (3b),
- des plateformes (4) intercalées entre les pales (3) de soufflante et fixées à la périphérie du disque (2), chaque plateforme (4) comportant une surface aérodynamique (4a) s'étendant le long dudit axe sensiblement depuis les bords d'attaque (3a) jusqu'aux bords de fuite (3b) des pales (3) entre lesquelles cette plateforme (4) est montée,
**caractérisé en ce que** ladite surface aérodynamique (4a) comprend une portion longitudinale amont (40) située du côté des bords d'attaque (3a) des pales (3) et une portion longitudinale aval (41), indépendante de la portion longitudinale amont, située du côté des bords de fuite (3b) des pales (3), la portion longitudinale amont (40) étant portée par un premier organe (5) de la plateforme (4) qui est fixé audit disque (2) et la portion longitudinale aval (41) étant portée par un second organe (6) de la plateforme (4) qui est indépendant dudit premier organe (5) et qui est fixé audit disque (2).

2. Rotor (1) selon la revendication 1, dans lequel le second organe (6) est fixé au disque (2) de manière pivotante.

3. Rotor (1) selon la revendication 1 ou 2, dans lequel une dimension axiale de la portion longitudinale amont (40), selon un axe de rotation du rotor, est comprise entre 0,5 fois et 1,5 fois une dimension axiale de la portion longitudinale aval (41).

4. Rotor (1) selon l'une des revendications précédentes, dans lequel le second organe (6) est fixé sur le disque (2) par un unique élément de fixation (7) définissant un axe de pivotement de cette portion longitudinale aval (41) par rapport au disque (2).

5. Rotor (1) selon la revendication 4, dans lequel le second organe (6) comprend une patte de fixation (6) appliquée axialement sur une bride (8) du disque (2), la patte de fixation (6) comportant un orifice axial (6a) aligné avec un orifice axial (8a) de la bride (8), ledit élément de fixation (7) traversant les orifices axiaux (6a, 8a) de la patte de fixation (6) et de la bride (8).

6. Rotor (1) selon la revendication 5, dans lequel l'orifice de la patte de fixation (6) reçoit au moins partiellement une bague (9) traversée par ledit élément de fixation (7), cette bague (9) étant serrée et séparée par des jeux axial (Ja) et radial (Jr) de ladite patte de fixation (6).

7. Rotor (1) selon la revendication 6, dans lequel l'élément de fixation (7) est une vis dont une tête (7a) prend appui sur une face de la bride (8) ou d'une pièce rapportée (10) sur cette face et une tige filetée reçoit un écrou (11) qui prend appui sur ladite bague (9).

8. Rotor (1) selon l'une des revendications précédentes, dans lequel une (40) des portions longitudinales (40, 41) comprend, à son extrémité longitudinale située du côté de l'autre (41) des portions longitudinales (40, 41), une surface d'appui (12) pour l'autre portion longitudinale (41).

9. Rotor (1) selon la revendication 8, dans lequel les portions longitudinales (40, 41) comprennent des bords circonférentiels en regard l'un de l'autre, ladite surface d'appui (12) s'étendant le long de l'un de ces bords sur une partie seulement de l'étendue circonférentielle de ce bord.

10. Turbomachine d'aéronef, **caractérisée en ce qu'**elle comporte un rotor (1) selon l'une des revendications précédentes.

## Patentansprüche

1. Gebläserotor (1) für eine Turbomaschine, wobei dieser Rotor (1) eine Drehachse hat und Folgendes aufweist:
- eine Gebläsescheibe (2),
- Gebläseschaufeln (3), die in Vertiefungen des Umfangs der Scheibe (2) eingepresste Füße aufweisen, wobei jede Schaufel (3) eine Unterseite, eine Oberseite, eine Angriffskante (3a) und eine Fluchtkante (3b) umfasst,
- Plattformen (4), die zwischen den Gebläseschaufeln (3) ineinander geschachtelt sind und am Umfang der Scheibe (2) befestigt sind, wobei jede Plattform (4) eine aerodynamische Oberfläche (4a) aufweist, die sich entlang der Achse im Wesentlichen von den Angriffskanten (3a) bis zu den Fluchtkanten (3b) der Schaufeln (3) erstreckt, zwischen denen diese Plattform (4) montiert ist,
**dadurch gekennzeichnet, dass** die aerodynamische Oberfläche (4a) einen länglichen vorgelagerten Abschnitt (40) umfasst, der sich auf der Seite der Angriffskanten (3a) der Schaufeln (3) befindet, und einen länglichen nachgelagerten Abschnitt (41), der von dem länglichen vorgelagerten Abschnitt unabhängig ist, der sich auf der Seite der Fluchtkanten (3b) der Schaufeln (3) befindet, wobei der längliche vorgelagerte Abschnitt (40) von einem ersten Organ (5) der Plattform (4) getragen wird, das an der Scheibe (2) befestigt ist, und der längliche nachgelagerte Abschnitt (41) von einem zweiten Organ (6) der Plattform (4) getragen wird, das von dem ersten Organ (5) unabhängig ist und das an der Scheibe (2) befestigt ist.

2. Rotor (1) nach Anspruch 1, wobei das zweite Organ (6) schwenkbar an der Scheibe (2) befestigt ist.

3. Rotor (1) nach Anspruch 1 oder 2, wobei eine axiale Abmessung des länglichen vorgelagerten Abschnitts (40) entlang einer Drehachse des Rotors zwischen dem 0,5-fachen und dem 1,5-fachen einer axialen Abmessung des länglichen nachgelagerten Abschnitts (41) liegt.

4. Rotor (1) nach einem der vorstehenden Ansprüche, wobei das zweite Organ (6) auf der Scheibe (2) durch ein einzelnes Befestigungselement (7) befestigt ist, das eine Schwenkachse dieses länglichen nachgelagerten Abschnitts (41) in Bezug auf die Scheibe (2) definiert.

5. Rotor (1) nach Anspruch 4, wobei das zweite Organ (6) eine Befestigungslasche (6) aufweist, die axial an einem Flansch (8) der Scheibe (2) angebracht ist, wobei die Befestigungslasche (6) eine axiale Öffnung (6a) aufweist, die mit einer axialen Öffnung (8a) des Flansches (8) fluchtet, wobei das Befestigungselement (7) die axialen Öffnungen (6a, 8a) der Befestigungslasche (6) und des Flansches (8) durchdringt.

6. Rotor (1) nach Anspruch 5, wobei die Öffnung der Befestigungslasche (6) zumindest teilweise einen Ring (9) aufnimmt, der von dem Befestigungselement (7) durchdrungen wird, wobei dieser Ring (9) eingespannt und durch ein axiales (Ja) und radiales (Jr) Spiel der Befestigungslasche (6) getrennt ist.

7. Rotor (1) nach Anspruch 6, wobei das Befestigungselement (7) eine Schraube ist, deren Kopf (7a) auf einer Seite des Flansches (8) oder eines auf dieser Seite angebrachten Teils (10) zur Auflage kommt und eine Gewindestange eine Mutter (11) aufnimmt, die auf dem Ring (9) zur Auflage kommt.

8. Rotor (1) nach einem der vorstehenden Ansprüche, wobei einer (40) der länglichen Abschnitte (40, 41) an seinem Längsende, das sich auf der Seite des anderen (41) der länglichen Abschnitte (40, 41) befindet, eine Auflagefläche (12) für den anderen länglichen Abschnitt (41) umfasst.

9. Rotor (1) nach Anspruch 8, wobei die länglichen Abschnitte (40, 41) einander zugewandte Umfangskanten umfassen, wobei sich die Auflagefläche (12) entlang einer dieser Kanten nur über einen Teil der Umfangserstreckung dieser Kante erstreckt.

10. Flugzeugturbomaschine, **dadurch gekennzeichnet, dass** sie einen Rotor (1) nach einem der vorstehenden Ansprüche aufweist.

## Claims

1. A fan rotor (1) for a turbomachine, this rotor (1) having an axis of rotation and comprising:
- a fan disc (2),
- fan blades (3) comprising roots press-fitted in sockets in the periphery of said disc (2), each blade (3) comprising an intrados, an extrados, a leading edge (3a) and a trailing edge (3b),
- platforms (4) interposed between the fan blades (3) and fixed to the periphery of the disc (2), each platform (4) comprising an aerodynamic surface (4a) extending along said axis substantially from the leading edges (3a) to the trailing edges (3b) of the blades (3) between which this platform (4) is mounted, **characterized in that** said aerodynamic surface (4a) comprises an upstream longitudinal portion (40) located on the side of the leading edges (3a) of the blades (3) and a downstream longitudinal portion (41), independent of the upstream longitudinal portion, located on the side of the trailing edges (3b) of the blades (3), the upstream longitudinal portion (40) being supported by a first member (5) of the platform (4) which is fixed to said disc (2) and the downstream longitudinal portion (41) being supported by a second member (6) of the platform (4) which is independent of said first member (5) and which is fixed to said disc (2).

2. The rotor (1) according to claim 1, wherein the second member (6) is fixed to the disc (2) in a pivotable manner.

3. The rotor (1) according to claim 1 or 2, wherein an axial dimension of the upstream longitudinal portion (40), along an axis of rotation of the rotor, is between 0.5 times and 1.5 times an axial dimension of the downstream longitudinal portion (41).

4. The rotor (1) according to one of the preceding claims, wherein the second member (6) is fixed to the disc (2) by a single fixing element (7) defining a pivot axis of this downstream longitudinal portion (41) with respect to the disc (2).

5. The rotor (1) according to claim 4, wherein the second member (6) comprises a fixing bracket (6) axially applied to a flange (8) of the disc (2), the fixing bracket (6) comprising an axial orifice (6a) aligned with an axial orifice (8a) of the flange (8), said fixing element (7) passing through the axial orifices (6a, 8a) of the fixing bracket (6) and of the flange (8).

6. The rotor (1) according to claim 5, in which the orifice of the fixing bracket (6) at least partially receives a ring (9) through which said fixing element (7) passes, this ring (9) being clamped and separated by axial (Ja) and radial (Jr) clearances from said fixing bracket (6).

7. The rotor (1) according to claim 6, wherein the fixing element (7) is a screw, a head (7a) of which rests on a face of the flange (8) or of an insert (10) on this face, and a threaded rod receives a nut (11) which rests on said ring (9).

8. The rotor (1) according to any of the preceding claims, wherein one (40) of the longitudinal portions (40, 41) comprises, at its longitudinal end located on the side of the other (41) of the longitudinal portions (40, 41), a bearing surface (12) for the other longitudinal portion (41).

9. The rotor (1) according to claim 8, wherein the longitudinal portions (40, 41) comprise circumferential edges facing each other, said bearing surface (12) extending along one of these edges over only one part of the circumferential extent of this edge.

10. An aircraft turbomachine, **characterized in that** it comprises a rotor (1) according to one of the preceding claims.
